# EUROPÄISCHE PATENTSCHRIFT

(11) **EP 2 997 239 B1**
(45) Veröffentlichungstag und Bekanntmachung des Hinweises auf die Patenterteilung: **16.08.2017**
(21) Anmeldenummer: 14726911.2
(22) Anmeldetag: 16.05.2014
(51) Int. Cl.: F01M 13/00, F16L 53/00, H01R 13/71

(54) **BLOWBY-EINRICHTUNG**
BLOWBY DEVICE
DISPOSITIF BLOWBY

(30) Priorität: 17.05.2013 DE 102013105131
(43) Veröffentlichungstag der Anmeldung: 23.03.2016
(73) Patentinhaber: DBK David + Baader GmbH, Nordring 26 76761 Rülzheim (DE)
(72) Erfinder: WEBER, Thomas, 76773 Kuhardt (DE)
(74) Vertreter: Winter, Brandl, Fürniss, Hübner, Röss, Kaiser, Polte - Partnerschaft mbB
(86) Internationale Anmeldenummer: PCT/EP2014/060050
(87) Internationale Veröffentlichungsnummer: WO 2014/184333

(56) Entgegenhaltungen:
- EP-A1- 2 236 780
- EP-A2- 2 418 361
- US-A1- 2002 016 102
- US-A1- 2008 099 000
- US-A1- 2009 229 584

## Beschreibung

Die Erfindung betrifft eine Blowby-Einrichtung gemäß dem Oberbegriff des Patentanspruchs 1.

Eine derartige Blowby-Einrichtung ist in den Druckschriften EP 1 164 264 B1 und EP 1 375 997 B1 der Anmelderin erläutert. Demgemäß füllt sich beim Betrieb eines Verbrennungsmotors aufgrund von Undichtigkeiten im Bereich der Kolbenabdichtung das Kurbelgehäuse mit Verbrennungsgasen, die sich mit Öldämpfen mischen und allgemein als Blowby-Gase bezeichnet werden. Durch den Hub der Kolben des Verbrennungsmotors werden diese Blowby-Gase zusätzlich mit Druck beaufschlagt, es entsteht ein pulsierender Volumenstrom. Da dieser schädliche Kohlenwasserstoff-verbindungen enthält und darüber hinaus der Volumenstrom vergleichsweise hoch ist - selbst bei optimaler Abdichtung der Kolbenringe kann der Blowby-Gasvolumenstrom etwa 0,5 bis 2% des gesamten Gasvolumenstroms betragen - sind Maßnahmen erforderlich, um ein Entweichen dieser Gase an die Umgebung zu vermeiden.

Hierzu ist es allgemeiner Stand der Technik, eine unterdruckgeregelte Kurbelgehäuseentlüftung vorzusehen. Bei dieser wird das aus dem Kurbelgehäuse strömende Blowby-Gas zunächst über eine Ölabscheidevorrichtung geführt, um dann ein Druckregelventil (Blowby-Ventil) zu passieren und an einer Einleitstelle zur Nachverbrennung in den Ansaugtrakt des Verbrennungsmotors zu gelangen.

Die Ölabscheidevorrichtung ist häufig ein Zyklonabscheider, aus diesem wird der Großteil des Öls in die Ölwanne zurückgeführt.

Das Druckregelventil hält den Unterdruck im Kurbelgehäuse möglichst konstant und begrenzt diesen. Bei Motorstillstand ist das Druckregelventil geöffnet. Im Leerlauf- oder Schubbetrieb, welcher durch Unterdruck im Ansaugrohr und wenig Blowby-Gas gekennzeichnet ist, schließt das Druckregelventil. Bei höherer Last entsteht mehr Blowby-Gas, das Druckregelventil öffnet, um den Unterdruck etwa konstant zu halten.

Ein Problem besteht darin, dass insbesondere bei geringen Außentemperaturen die warmen Blowby-Gase mit der kalten Ansaugluft zusammen treffen und dann durch die schnelle Abkühlung im Bereich der Zusammenführung der beiden Gasströme der Einleitstelle eine Kondensation auftritt, was zu einer Vereisung in diesem Bereich führen kann. Ebenso ist eine Vereisung im Bereich des Druckregelventils möglich. Um eine derartige Vereisung in Komponenten, die vom Blowby-Gas durchströmt werden, zu vermeiden, werden diese über eine Heizung aufgewärmt. Derartige Lösungen sind bereits in der DE-AS 24 32 782, EP 1 314 869 B1 und der DE 195 18 712 A1 beschrieben. Diese Heizungen sind als herkömmliche elektrische Heizungen ausgeführt. Mit dem eingangs genannten Stand der Technik wird vorgeschlagen, PTC-Widerstandselemente als Heizelemente zu verwenden.

Das Aufheizen von Blowby-Gasen oder von diesen durchströmten Komponenten ist auch aus den Druckschriften US 4,922,882 und US 4,312,121 bekannt.

Ein Problem all dieser Lösungen besteht darin, dass beispielsweise bei Wartungsarbeiten am Motor vergessen werden kann, wieder alle Fluidverbindungen, insbesondere die das Kurbelgehäuse mit dem Ansaugtrakt verbindende Blowby-Leitung, anzuschließen. So kann beispielsweise die Verbindung zwischen dem Ansaugtrakt und dem Blowby-Heizer oder die Verbindung zwischen dem Kurbelgehäuse und dem genannten Heizer - diese Verbindung ist üblicher Weise durch einen Schlauch ausgebildet - getrennt bleiben. Durch diese versehentliche Trennung wird der Blowby-Gasvolumenstrom an die Umgebung abgegeben - dies ist im Hinblick auf eine mögliche Umweltverschmutzung zu vermeiden. Problematisch für die Funktion des Verbrennungsmotors ist auch, dass dann die Ansaugseite des Verbrennungsmotors "Falschluft" zieht und das Motormanagement nicht mehr abgasoptimiert arbeiten kann.

Zur Überwindung dieses Nachteils wird in der EP 2 418 361 A2 vorgeschlagen, die Blowby-Einrichtung mit einer elektrisch leitenden Einheit auszuführen, die mittels eines elektrischen Steckers kontaktiert wird. Diese Kontaktierung lässt sich nur herstellen, wenn alle Fluidverbindungen mechanisch in der vorbestimmten Weise hergestellt sind.

Um dies zu realisieren ist bei der bekannten Lösung an einem Kupplungsstück ein Steckerkragen zur Aufnahme des Steckers ausgebildet, wobei das Einsetzen des Steckers nur dann möglich ist, wenn ein Sperrteil in eine Freigabeposition bewegt ist. Diese Verstellung des Sperrteils erfolgt bei einem Ausführungsbeispiel durch einen Mitnehmer am Kupplungsstück, wobei dieser Mitnehmer nur dann in Wirkeingriff mit dem Sperrteil gelangt, wenn die Fluidverbindung ordnungsgemäß hergestellt ist.

Nachteilig bei einer derartigen Lösung ist, dass ein erheblicher vorrichtungstechnischer Aufwand erforderlich ist, um an dem Kupplungsstück und einem zugeordneten Stutzen der Steckerkragen, den Mitnehmer und das Sperrteil auszubilden. Des Weiteren wird der Stecker quer zur Achse der Fluidleitung eingesetzt, so dass auch der Montageaufwand erheblich ist.

Es sind auch Lösungen bekannt, bei denen das Ziehen von "Falschluft" über einen Luftmengenmesser erfasst wird, so dass aus dem Signal des Luftmengenmessers auf eine nicht ordnungsgemäße mechanische Verbindung im Bereich der Blowby-Einrichtung geschlossen werden kann. Derartige Lösungen lassen sich jedoch nur bei relativ großen Leitungsquerschnitten verwenden.

In der DE 10 2010 020 844 ist ein Verfahren zur Steuerung einer Blowby-Funktion eines Verbrennungsmotors offenbart. Diese Blowby-Einrichtung hat eine Heizung zur Erwärmung der Blowby-Gase. Dabei wird die Leistungsaufnahme der Heizelemente überwacht und bei einer Abweichung dieser Leistungsaufnahme von einer vorgegebenen Kennlinie auf eine Verstopfung oder nicht ordnungsgemäß ausgeführte Verbindung rückgeschlossen.

Eine derartige Lösung erfordert einen nicht unerheblichen Regelungsaufwand.

Dem gegenüber liegt der Erfindung die Aufgabe zugrunde, eine Blowby-Einrichtung zu schaffen, bei der der Blowby-Gasströmungspfad mit einfachen Mitteln auf seine ordnungsgemäße Funktion überprüft werden kann.

Diese Aufgabe wird durch eine Blowby-Einrichtung mit den Merkmalen des Patentanspruchs 1 gelöst.

Vorteilhafte Weiterbildungen der Erfindung sind Gegenstand der Unteransprüche.

Die erfindungsgemäße Blowby-Einrichtung hat einen ansaugseitigen Anschlussstutzen, der mit einem Kupplungsstück lösbar verbunden ist. An dieses ist eine Blowby-Leitung angeschlossen. Die Verbindung zwischen dem Kupplungsstück und dem Anschlussstutzen ist mittels eines Sicherungsrings gesichert. Erfindungsgemäß ist ein an den Anschlussstutzen ansetzbarer Ring vorgesehen, der einen Steckerkragen zur Aufnahme eines Steckers trägt, der bei mit dem Kupplungsstück verbundenen Anschlussstutzen einen elektrischen Kontakt schließt. Ein derartiger Ring kann beispielsweise nachrüstbar an geeignete Anschlussstutzen angesetzt werden, wobei es keiner Änderung des Anschlussstutzens bedarf. Dies ist ein wesentlicher Vorteil zu den eingangs erläuterten Lösungen, bei denen am Anschlussstutzen oder am Kupplungsstück umfangreiche Änderungen vorgesehen werden mussten, um eine Aufnahme für einen Stecker auszubilden. Die erfindungsgemäße Lösung ermöglicht es somit, bei sehr geringem vorrichtungstechnischem Aufwand und Montageaufwand die Betriebssicherheit einer Blowby-Einrichtung zu verbessern.

Bei einem Ausführungsbeispiel der Erfindung ist an dem Ring ein Taster ausgebildet, der bei Verbringen des Sicherungsrings in seine Sicherungsposition betätigt wird und dabei elektrische Kontakte in Richtung ihrer Kontaktposition mit dem Stecker verschiebt.

Diese Kontakte können beispielsweise durch ein Federelement gebildet werden, das in Richtung eines Unterbrechens des Kontaktes vorgespannt ist.

Bei einem Ausführungsbeispiel der Erfindung kann ein derartiges Federelement mit zumindest einem Stützschenkel ausgebildet sein, der an einem Gehäusedeckel oder dergleichen abgestützt ist.

Das Federelement ist gemäß einer Variante der Erfindung als Blattfederelement ausgeführt, das in einem Gehäuse aufgenommen ist, in dem auch der Taster verschiebbar geführt ist und das etwa tangential an den Ring angesetzt ist.

Die Verbindung zwischen Anschlussstutzen und Ring ist besonders einfach, wenn dieser mit dem Anschlussstutzen verrastet wird.

Die Montagesicherheit lässt sich weiter verbessern, wenn der Ring zumindest ein Führungselement zur Lagepositionierung des Sicherungsrings hat, so dass diese beiden Bauelemente nur in einer vorbestimmten Relativposition zueinander in Wirkeingriff bringbar sind.

Die Verstellung des Tasters kann mittels eines Stirnflächenabschnitts des Sicherungsrings erfolgen, der in Anlage an einen etwa quer zur Verstellrichtung vorstehenden Mitnehmer des Tasters bringbar ist.

Die Blowby-Einrichtung kann besonders kompakt ausgeführt werden, wenn die Verstellrichtung des Tasters in etwa parallel zur Stutzenachse verläuft.

Vorteilhaft ist es auch, den Stecker parallel zur Stutzenachse anzuordnen.

Bei einer alternativen Lösung ist der Sicherungsring mit einer Führungsmanschette für den Stecker ausgebildet, die zum Verbinden in Überdeckung mit dem Steckerkragen bringbar ist.

Im Steckerkragen kann eine Kontaktbrücke vorgesehen sein, die beim Einstecken des Steckers den Kontakt schließt. Diese Variante unterscheidet sich somit von der eingangs beschriebenen Variante darin, dass die Kontaktierung durch Einsetzen des Steckers erfolgt, während beim eingangs genannten Ausführungsbeispiel die Kontaktierung erst dann möglich ist, wenn über den Taster die elektrischen Kontakte in Richtung der Kontaktposition mit dem Stecker bewegt sind.

Bei der zweiten Alternativlösung wird es bevorzugt, wenn der Stecker in der Führungsmanschette des Sicherungsrings vormontiert ist.

Durch die Kontaktierung kann eine elektrische Verbindung zu einer Blowby-Heizung oder aber auch zu einem Detektor erstellt werden, über den bei Herstellen der elektrischen Verbindung ein Steuersignal abgegeben wird, aus dem ablesbar ist, dass die Blowby-Einrichtung "gesteckt" ist.

Eine derartige Blowby-Heizung kann im Bereich des Stutzen oder des Kupplungsstücks ausgebildet sein.

Bevorzugte Ausführungsbeispiele der Erfindung werden im Folgenden anhand schematischer Zeichnungen näher erläutert. Es zeigen:
Figur 1 eine dreidimensionale Darstellung eines ersten Ausführungsbeispiels einer Blowby-Einrichtung;
Figur 2 einen Anschlussstutzen, ein Kupplungsstück und einen Sicherungsring der Blowby-Einrichtung gemäß Figur 1;
Figur 3 eine dreidimensionale Draufsicht auf einen Ring der Blowby-Einrichtung gemäß Figur 1;
Figur 4 eine Unteransicht des Rings gemäß Figur 3 mit einem geöffneten Gehäuse;
Figur 5 den Ring gemäß den Figuren 3 und 4 in einem auf den Anschlussstutzen aufgesetzten Zustand;
Figur 6 eine Schnittdarstellung der Anordnung gemäß Figur 5;
Figur 7 eine weitere Schnittdarstellung mit einer Schnittebene, die durch einen Taster hindurch verläuft;
Figur 8 eine Schnittdarstellung gemäß Figur 7 bei verstelltem Taster und aufgesetztem Kupplungsstück;
Figur 9 eine Figur 4 entsprechende Darstellung mit betätigtem Taster und geschlossenen Kontakten;
Figur 10 eine dreidimensionale Darstellung eines weiteren Ausführungsbeispiels einer erfindungsgemäßen Blowby-Einrichtung;
Figur 11 eine Explosionsdarstellung der Blowby-Einrichtung gemäß Figur 10;
Figur 12 eine Schnittdarstellung der Blowby-Einrichtung gemäß den Figuren 10 und 11 im unkontaktierten Zustand;
Figur 13 eine Einzeldarstellung eines Rings des Ausführungsbeispiels gemäß Figur 10 und
Figur 14 eine Schnittdarstellung entsprechend derjenigen aus Figur 12 im kontaktierten Zustand der Blowby-Einrichtung.

Wie erläutert, ist es allgemein üblich das Kurbelgehäuse eines Verbrennungsmotors über eine Blowby-Leitung mit einem Ansaugtrakt, beispielsweise einem Reinluftrohr vor einem Abgasturbolader zu verbinden, so dass die Blowby-Gase aus dem Kurbelgehäuse abgezogen und der Ansaugluft beigemischt werden. Dabei ist in der Blowby-Leitung üblicher Weise ein Druckregelventil vorgesehen, das im Leerlauf oder im Schiebebetrieb des Motors die Blowby-Leitung absperrt. Der im Blowby-Gas enthaltene Ölanteil wird über einen Ölabscheider, beispielsweise einen Zyklonabscheider abgetrennt und über einen Ölrücklaufkanal in den Ölkreis zurückgeführt. Zur Vermeidung einer Vereisungsproblematik wird der Bereich, in dem die Blowby-Leitung in den Saugtrakt einmündet über eine im Folgenden nicht näher dargestellte Blowby-Heizeinrichtung erwärmt.

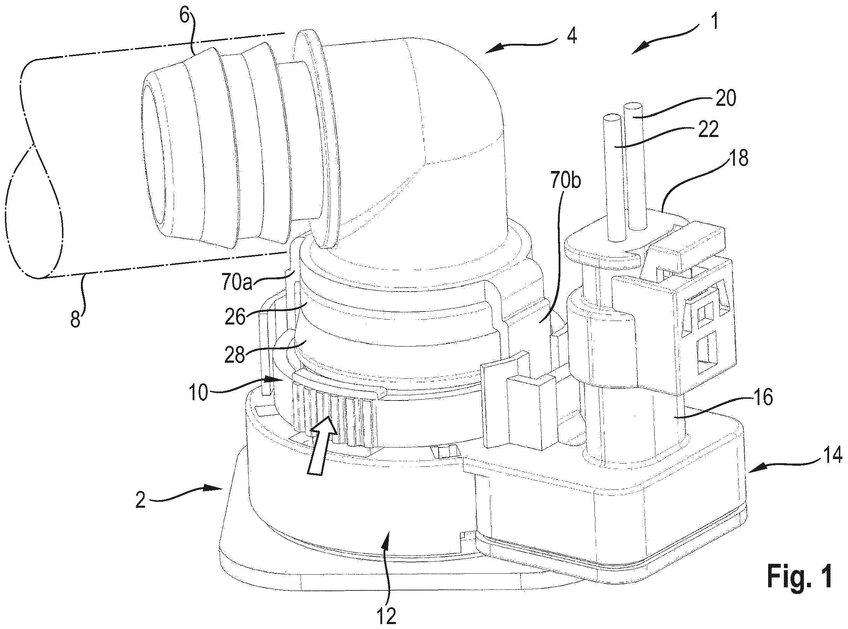

Figur 1 zeigt eine dreidimensionale Darstellung einer Blowby-Einrichtung 1 mit einem saugtraktseitigen Anschlussstutzen 2, an den ein Kupplungsstück 4 angesetzt ist. Die anschlussseitigen und kupplungsstückseitigen Kupplungselemente sind dabei in geeigneter Weise ausgeführt, es kann beispielsweise eine Kupplung der Firma Norma oder dergleichen verwendet werden. Beim dargestellten Ausführungsbeispiel ist das Kupplungsstück 4 mit einer 90°-Umlenkung ausgebildet, wobei an dem von dem Anschlussstutzen 2 entfernten Endabschnitt ein tannenzapfenförmiger Anschluss 6 ausgebildet ist, an den die gestrichelt angedeutete Blowby-Leitung 8 anschließbar ist. Diese ist üblicher Weise flexibel, durch ein Wellrohr oder einen Schlauch ausgebildet, der auf den Anschluss 6 aufgeschoben und gegebenenfalls entsprechend isoliert wird. Selbstverständlich kann auch eine starre Rohrleitung verwendet werden.

Um ein Lösen der Verbindung zwischen Anschlussstutzen 2 und Kupplungsstück 4 zu vermeiden, ist an letzterem ein Sicherungsring 10 ausgebildet, der beim Ansetzen des Kupplungsstücks 4 an den Anschlussstutzen 2 in formschlüssigem Eingriff gelangt, so dass ein Lösen der Verbindung nur dann möglich ist, wenn der Sicherungsring 10 in Pfeilrichtung beidseitig zusammengedrückt wird. An dem Anschlussstutzen 2 ist ein Ring 12 angesetzt, der, wie im Folgenden noch näher erläutert wird, mit dem Anschlussstutzen 2 verrastet ist und ein Gehäuse 14 trägt, aus dem nach oben in Figur 1 ein Steckerkragen 16 zur Aufnahme eines Steckers 18 auskragt. Bei ordnungsgemäßer Verbindung des Kupplungsstücks 4 und des Anschlussstutzens 2 und eingesetztem Stecker 8 besteht eine elektrische Verbindung, über die beispielsweise die Stromversorgung der genannten Blowby-Heizung erfolgt oder die elektrische Verbindung zu einem Detektor hergestellt wird, über den ein elektrisches Signal an die Motorsteuerung abgegeben werden kann.

Bei der konkreten Lösung hat der Stecker 18 zwei Stromzuführungen 20, 22, die in der im Folgenden beschriebenen Weise elektrisch verbunden werden können.

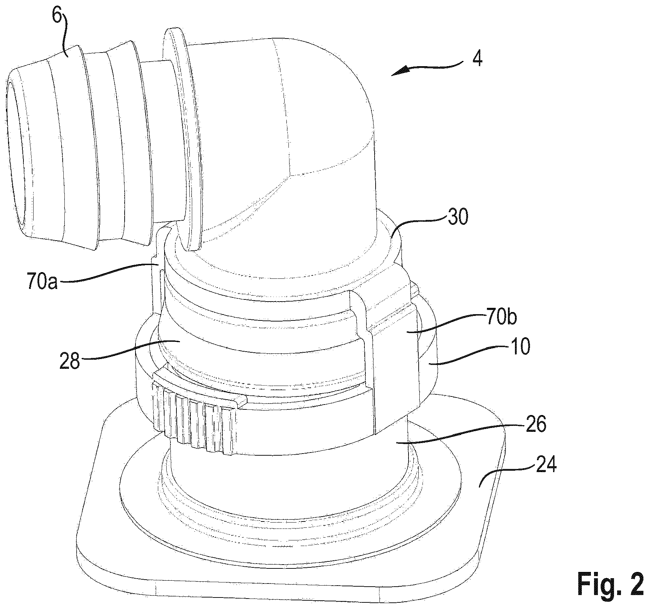

In Figur 2 ist die Anordnung aus Figur 1 ohne Ring 12 gezeigt. Dem gemäß hat der Anschlussstutzen 2 eine Grundplatte 24, die am Ansaugtrakt befestigt bzw. Teil desselben ist und aus der ein Stutzen 26 auskragt. Dieser hat an seinem Außenumfang eine umlaufende Rastschulter 28, die in verriegeltem Zustand von Elementen des Sicherungsrings 10 hintergriffen wird. Dieser wird als zusätzliches Bauteil ausgebildet sein oder - wie beim dargestellten Ausführungsbeispiel einstückig mit dem Kupplungsteil 4 ausgebildet sein. Ein nicht dargestellter Endabschnitt des Kupplungsstücks 4 ist mit einem O-Ring versehen, der in eine Umfangsnut eingesetzt ist und taucht in den vom Stutzen 26 umgriffenen Raum dichtend ein. Im verriegelten Zustand hintergreifen Rastnasen des Sicherungsrings 10 die Rastschulter 28, so dass eine formschlüssige Sicherung erfolgt.

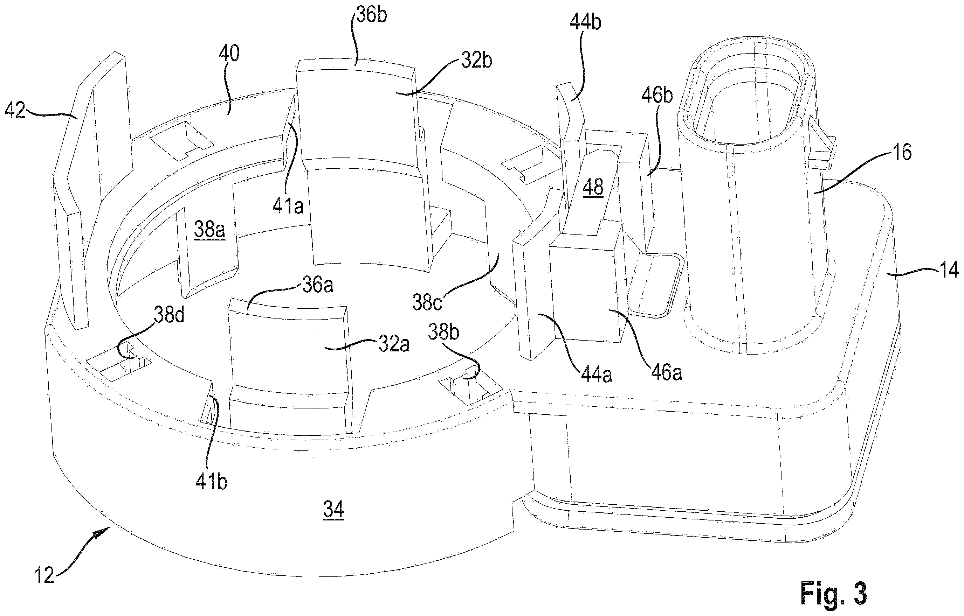

Figur 3 zeigt den auf den Anschlussstutzen 2 aufgesetzten Ring 12 in einer Einzeldarstellung. Man erkennt das seitlich angesetzte Gehäuse 14 mit dem nach oben (Ansicht in den Figuren 1 und 3) auskragenden Steckerkragen 16, der mit einem zum Stecker 18 passenden Steckergesicht ausgebildet ist.

Der Ring 12 ist so ausgelegt, dass er den Stutzen 26 unterhalb der Rastschulter 28 umgreift. Beim dargestellten Ausführungsbeispiel ist der Ring 12 aus Kunststoff hergestellt, wobei die einzelnen Komponenten im Spritzgießverfahren gefertigt werden. Am Ring 12 sind zwei diametral zueinander angeordnete Riegellaschen 32a, 32b ausgeformt, die mittels Schiebern des Spritzgießwerkzeugs freigeschnitten sind und in Axialrichtung über einen Ringgrundkörper 34 nach oben (Figur 3) zur Rastschulter 28 hin auskragen. Wie später noch gezeigt wird, untergreifen kreissegmentförmig gekrümmte Stirnflächenabschnitte 36a, 36b der Riegellaschen 32a, 32b die Rastschulter 28, so dass der Ring12 am Anschlussstutzen 2 lagefixiert ist. Die anschlussplattenseitige Abstützung des Rings 12 erfolgt über vier ebenfalls über Schieberanordnungen freigeschnittene Stützlaschen 38a, 38b, 38c, 38d. Gemäß der Darstellung in Figur 3 ist der Ringgrundkörper 34 mit einem Deckelring 40 ausgeführt, wobei die am Umfang verteilten Stützlaschen 38 sich in Verlängerung der Innenstirnfläche erstrecken. Gemäß der Darstellung in Figur 3 sind die Stützlaschen 38a, 38b, 38c, 38d versetzt zu den Riegellaschen 32a, 32b angeordnet. Die im Deckelring 40 stirnseitig mündenden Ausnehmungen sind für die Schieber zur Ausformung der Stützlaschen 38a, 38b, 38c und 38d erforderlich.

Auf der oben liegenden Stirnfläche des Deckelrings 40 sind des Weiteren einander gegenüberliegende Wandabschnitte 42 einerseits und 44a, 44b andererseits ausgebildet, die ebenfalls auf einer Diagonalen liegen, die etwa rechtwinklig zur Diagonalen der beiden Riegellaschen 32a, 32b liegt. Der Deckelring 40 hat zwei Ausnehmungen 41 a, 41 b, durch die hindurch sich die an die Innenumfangsfläche des Ringgrundkörpers 34 angebundenen Riegellaschen 32a, 32b hindurch erstrecken.

Die Wandabschnitte, 42, 44a, 44b dienen unter anderem zur Ausrichtung des Sicherungsrings 10, so dass dieser nur mit einer vorbestimmten Relativposition mit Bezug zum Ring 12 montierbar ist.

An den beiden Wandabschnitten 44a, 44b ist eine rückseitige Führung 46a, 46b ausgeführt, entlang der ein Taster 48 verschiebbar geführt ist. Die Führung ist so ausgebildet, dass eine Verstellung des Tasters 48 parallel zur Steckerachse und zur Achse des Rings 12 ermöglicht ist.

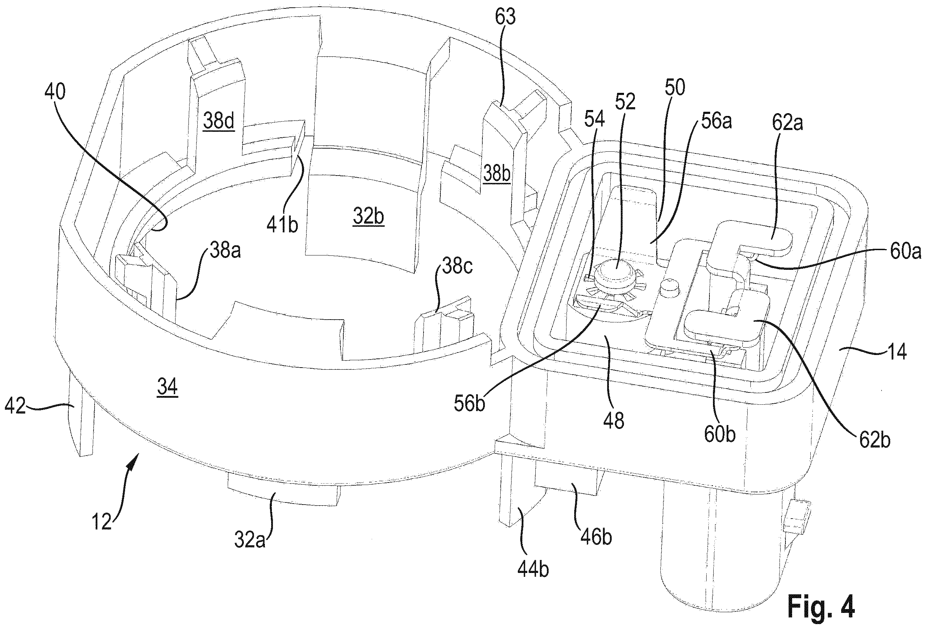

Figur 4 zeigt eine Ansicht von unten auf den Ring 12 bei geöffnetem Gehäuse 14. In dieser Darstellung sieht man deutlich die Wandabschnitte 42 und 44b, die sich in dieser Ansicht nach unten erstreckenden Riegellaschen 32a, 32b sowie die vier am Umfang verteilten Stützlaschen 38a, 38b, 38c und 38d, wobei letztere sich nach oben (Ansicht nach Figur 4) aus dem Deckelring 40 heraus erstrecken und seitlich an der Innenumfangsfläche des Ringgrundkörpers 34 abgestützt sind.

Das Gehäuse 14 ist mit abgenommenem Boden dargestellt, der im Folgenden noch näher erläutert wird. Man erkennt in dieser Darstellung ein Blattfederelement 50, das mit dem Taster 48 verbunden ist. Dieser hat einen Verbindungszapfen 52, der eine Klemmausnehmung 54 des Blattfederelementes 50 durchsetzt.

In einen sich an diese Klemmausnehmung 54 anschließenden Bereich ist das Blattfederelement 50 mit zwei V-förmig angestellten Stützschenkeln 56a, 56b ausgeführt, die an dem nicht dargestellten Boden des Gehäuses 14 abgestützt sind und somit den Taster in eine Grundposition vorspannen. Das Blattfederelement 50 verzweigt sich im Abstand zu den beiden Stützschenkeln 56a, 56b zu zwei angewinkelten Kontaktschenkeln 60a, 60b, deren Endabschnitte nach oben hin, in Richtung zu zwei Kontakten 62a, 62b abgewinkelt sind. In der dargestellten Grundposition stehen dabei die Kontaktschenkel 60a, 60b im Abstand zu den Kontakten 62a, 62b, die ihrerseits mit den Stromzuführungen 20, 22 verbunden sind. D. h., die elektrische Verbindung zwischen den Stromzuführungen 20, 22 ist in der in Figur 4 dargestellten Grundposition unterbrochen.

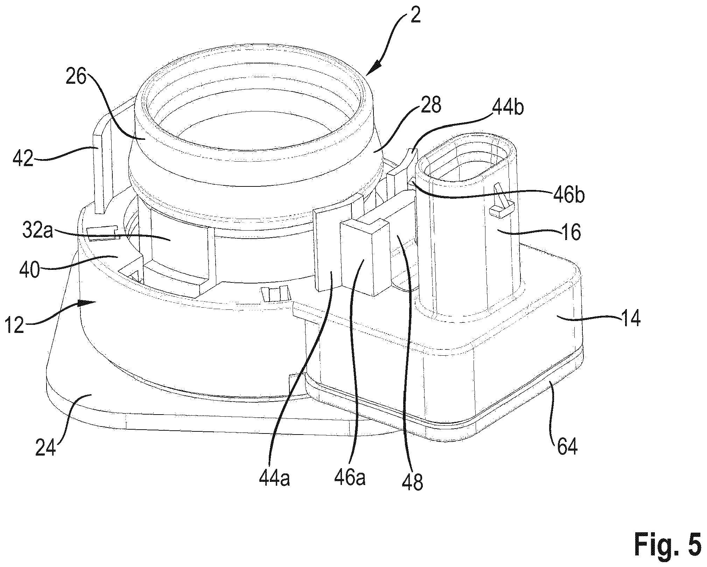

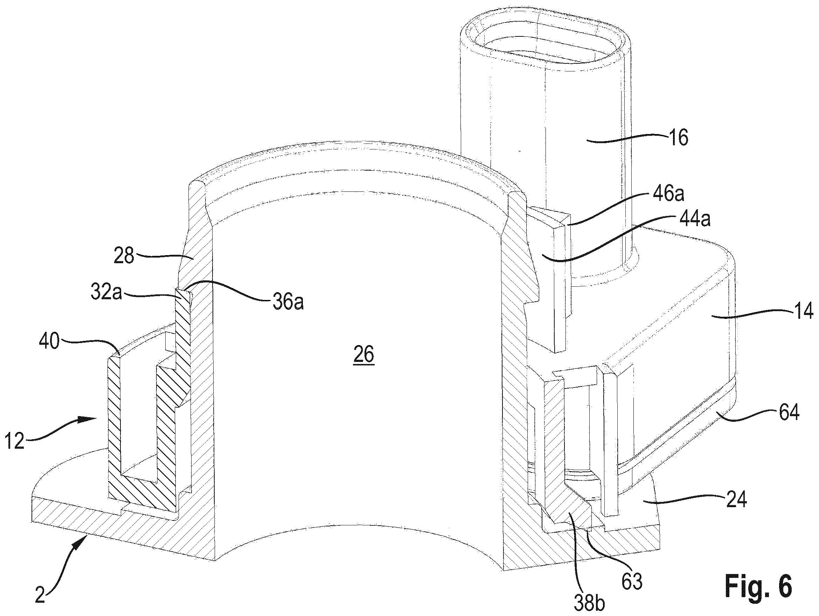

Figur 5 zeigt den Ring 12 gemäß den Figuren 3 und 4 in der auf den Anschlussstutzen 2 aufgesetzten Position. Dabei untergreifen die beiden Riegellaschen 32a, 32b (letztere nicht sichtbar) die umlaufende Rastschulter 28, wobei der Ring 12 über die vier am Umfang verteilten Stützlaschen 38 auf der Grundplatte 24 abgestützt ist. Dies wird besonders deutlich aus der Schnittdarstellung gemäß Figur 6. Der Schnitt ist so gelegt, dass man einerseits die die Rastschulter 28 untergreifende Riegellasche 32a sieht, die mit ihrem Stirnflächenabschnitt 36a an der unteren radialen Umfangskante der Rastschulter 28 anliegt. In diesem Schnitt sieht man auch die Stützlasche 38b, die mit ihrer angeschrägten Stirnseite 63 auf der Grundplatte 24 abgestützt ist, so dass der Ring 12 lagefixiert ist. Bei den Abbildungen gemäß den Figuren 4 und 5 ist der angesprochene Boden 64 des Gehäuses 14 montiert, wobei sich dann die beiden Stützschenkel 56a, 56b an der Innenfläche des Bodens 64 abstützten und den Taster 48 in seine Grundposition gemäß Figur 5 vorspannen.

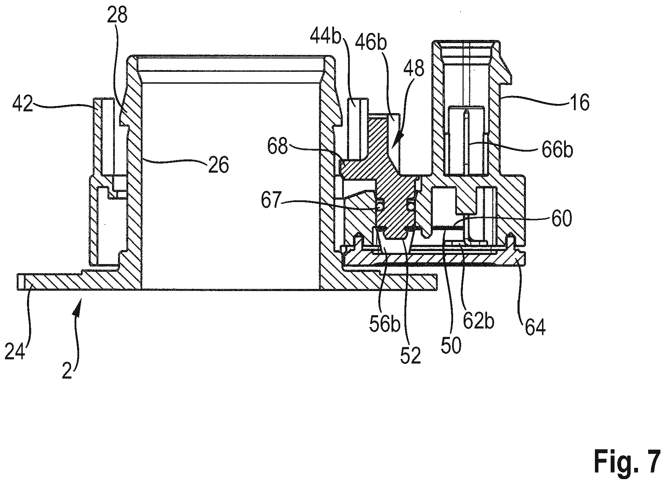

Figur 7 zeigt einen weiteren Schnitt durch die Anordnung gemäß Figur 5, wobei diese Schnittlinie so verläuft, dass der Taster 48 sichtbar ist. Man sieht in dieser Darstellung die Wandabschnitte 42 und 44b sowie einen Teil der Führung 46b für den Taster 48. Wie erläutert, hat dieser den Zapfen 52, über den das Blattfederelement 50 festgelegt ist. Sichtbar ist auch der Kontakt 62b, der sich in den Steckerkragen 16 hinein erstreckt. In der Darstellung gemäß Figur 7 ist dieser Endabschnitt des Kontakts 62 mit dem Bezugszeichen 66b versehen. Gemäß Figur 7 steht das Blattfederelement 50 mit den Kontaktschenkeln 60 im Abstand zu den beiden Kontakten 62a, 62b, so dass die elektrische Verbindung unterbrochen ist. Die beiden Stützschenkel 56a, 56b von denen in Figur 7 lediglich der Stützschenkel 56b sichtbar ist stützen sich am Boden 64 ab. Zur Abdichtung ist der Taster 48 noch mit einem O-Ring 67 versehen. Der Taster 48 hat des Weiteren einen hin zum Stutzen 26 in Radialrichtung auskragenden Mitnehmer 68, der sich in den Bereich unterhalb der Rastschulter 28 bis kurz vor die Außenumfangsfläche des Stutzens 26 erstreckt.

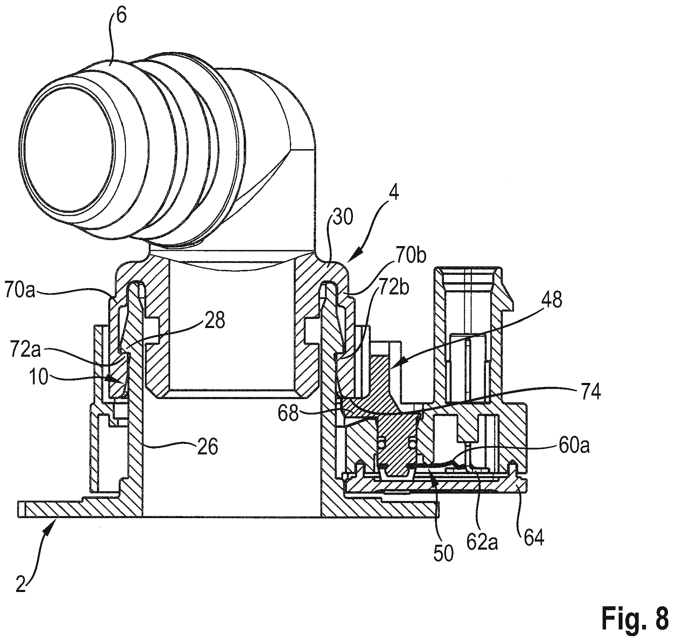

Figur 8 zeigt die Anordnung gemäß Figur 7 mit angesetztem Kupplungsstück 4. Dieses ist - wie erläutert - mit dem Sicherungsring 10 ausgebildet, der über zwei elastische Haltearme 70a, 70b mit dem Kupplungsstück 4 verbunden ist. (Siehe auch Figur 1). Diese Haltearme 70a, 70b sind in der Darstellung gemäß Figur 2 an die umlaufende Stützschulter 30 angesetzt, mit der das Kupplungsstück 4 auf der Stirnfläche des Anschlussstutzens 2 aufsitzt. Der umlaufende Sicherungsring 10 hat zumindest zwei Rastnasen 72a, 72b, die in der dargestellten Verriegelungsposition die umlaufende Rastschulter 28 untergreifen, so dass das Kupplungsstück 4 mit Bezug zum Anschlussstutzen 2 sowohl in Axialrichtung als auch in Radialrichtung verriegelt ist. Beim Aufsetzen des Kupplungsstückes 4 gelangt ein Stirnflächenabschnitt 74 des Sicherungsrings 10 in Anlage an den Mitnehmer 68, so dass der Taster 48 gegen die Kraft des Blattfederelementes 50 nach unten, in Richtung zum Boden 64 bewegt wird, und die beiden Kontaktschenkel 60a, 60b, von denen lediglich der Kontaktschenkel 60a in Figur 8 sichtbar ist in Anlage an die zugeordneten Kontakte 62a, 62b gelangen, so dass beide Kontakte 62a, 62b elektrisch kontaktiert sind und somit eine elektrische Verbindung zwischen diesen hergestellt ist. Diese elektrische Kontaktierung erfolgt - wie gesagt - gegen die Kraft der beiden am Boden 64 abgestützten V-förmig zueinander angestellten Stützschenkel 56a, 56b.

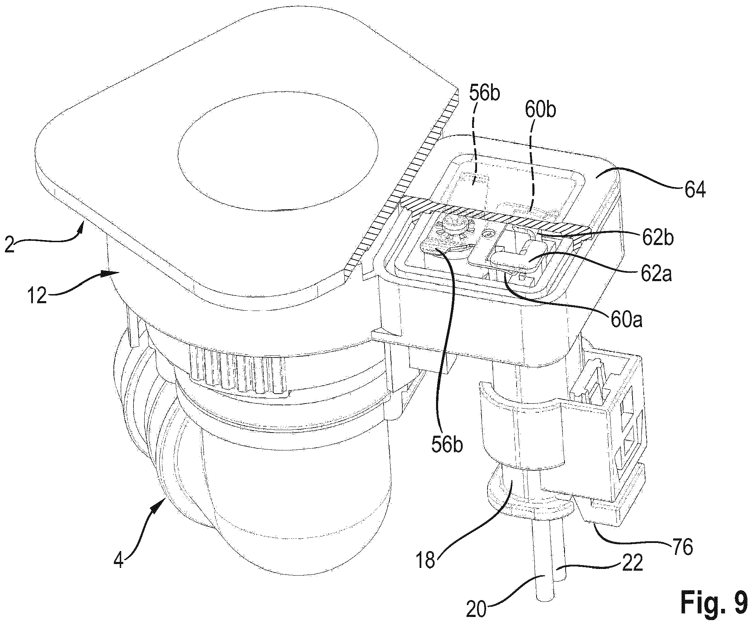

Figur 9 zeigt eine Figur 4 entsprechende Ansicht mit der elektrischen Kontaktierung. Man erkennt das Abstützen der beiden Stützschenkel 56a, 56b am Boden 64 (nur halbseitig dargestellt) und die in dieser Position an den Kontakten 62a, 62b anliegenden Kontaktschenkel 60a, 60b. In der Darstellung gemäß Figur 9 ist auch der Stecker 18 eingesetzt, wobei dieser mit einem Sicherungselement 76 gegen versehentliches Abziehen des Steckers 18 versehen ist. Bei vorschriftsmäßig gesteckter Verbindung zwischen dem Anschlussstutzen 2 und dem Kupplungsstück 4 ist die elektrische Verbindung zwischen den beiden Stromzuführungen 20, 22 hergestellt, so dass entsprechend eine Blowby-Heizung oder aber auch ein Detektor zur Abgabe eines Signals "Steckverbindung hergestellt" ansteuerbar ist.

Bei dem vorbeschriebenen Ausführungsbeispiel wird ein zusätzlicher Ring 12 verwendet, um mit einem herkömmlichen Kupplungsstück 4 und einem Anschlussstutzen 2 eine Steckverbindung für die Blowby-Einrichtung 1 herzustellen, wobei die elektrische Kontaktierung innerhalb des Rings 12 nur bei vorschriftsmäßiger Steckverbindung ermöglicht ist.

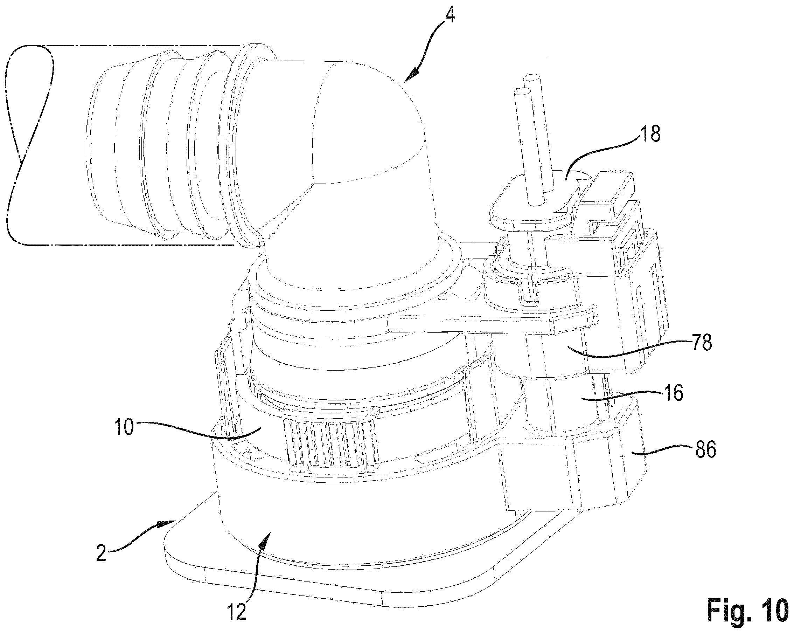

Anhand der Figuren 10 bis 13 wird eine Variante erläutert, bei der die elektrische Kontaktierung im Wesentlichen über den Stecker 18 erfolgt, der jedoch nur bei vorschriftsmäßig hergestellter Steckverbindung einsetzbar ist. Der Grundaufbau des Anschlussstutzens 2 und des Kupplungsstücks 4 entspricht dem zuvor erläuterten Ausführungsbeispiel, wobei diesmal auch der Sicherungsring 10 als getrenntes Bauteil hergestellt ist. Dies ist prinzipiell auch beim zuvor beschriebenen Ausführungsbeispiel möglich. Bei der Variante gemäß Figur 10 ist an den auf den Anschlussstutzen 2 aufgesetzten Ring 12 der Steckerkragen 16 für den Stecker 18 angesetzt. Der Sicherungsring 10 ist bei dieser Variante mit einer Führungsmanschette 78 für den Stecker 18 ausgeführt, so dass letzterer nur dann einsetzbar ist, wenn die Führungsmanschette 78 mit Bezug zum Steckerkragen 16 ausgerichtet ist. Diese Ausrichtung liegt erfindungsgemäß nur dann vor, wenn eine ordnungsgemäße Steckverbindung zwischen dem Anschlussstutzen 2 und dem Kupplungsstück 4 vorliegt. Der Stecker 18 wird beim Verbau der Einheit zunächst in die Führungsmanschette 78 eingesetzt, bildet dann also eine Montageeinheit.

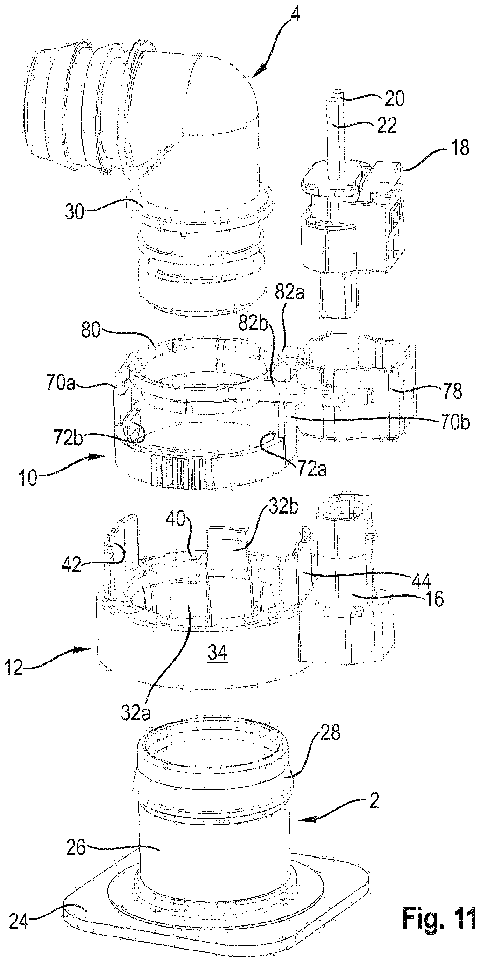

Die einzelnen Bauteile dieses zweiten Ausführungsbeispiels sind in Figur 11 dargestellt. Man sieht in dieser Darstellung den Anschlussstutzen 2 und das winkelförmige Kupplungsstück 4, deren Grundaufbau demjenigen der entsprechenden Bauteile des zuvor beschriebenen Ausführungsbeispiels entspricht. Der Stecker 18 ist wiederum mit Stromzuführungen 20, 22 versehen, die bei ordnungsgemäßer Verbindung elektrisch verbunden sind. Wie erläutert, ist bei diesem Ausführungsbeispiel der Sicherungsring 10 als gesondertes Bauteil ausgeführt, prinzipiell ist es jedoch auch möglich, den Sicherungsring einstückig mit dem Kupplungsstück 4 auszubilden.

Bei der dargestellten Variante hat der Sicherungsring 10 zwei an seinem Innenumfang verteilte Rastnasen 72a, 72b. Diese untergreifen im Verriegelungszustand die Rastschulter 28 des Anschlussstutzens 2. An dem eigentlichen Sicherungsring 10 sind wiederum zwei Haltearme 70a, 70b ausgebildet, die sich achsparallel nach oben (Ansicht nach Figur 11) erstrecken und einen Haltering 80 tragen, der in der Montageposition an der Stützschulter 30 des Kupplungsstücks 4 anliegt. An diesem Haltering 80 ist über Radialstützen 82a, 82b die Führungsmanschette 78 gehalten, in die der Stecker 18 vormontierbar ist. Das heißt, vor dem Herstellen der Verbindung zwischen dem Anschlussstutzen 2 und dem Kupplungselement 4 ist der Stecker 18 bereits an der Führungsmanschette 78 vormontiert. Der Ring 12 ist wie beim zuvor beschriebenen Ausführungsbeispiel an den Anschlussstutzen 2 angesetzt, wobei die Verrasterung ähnlich wie beim zuvor beschriebenen Ausführungsbeispiel über zwei diametral zueinander angeordnete Riegellaschen 32a, 32b erfolgt, die im verriegelten Zustand die Rastschulter 28 des Stutzens 26 untergreifen. Zur Führung und Lagepositionierung des Sicherungsrings 10 sind am Deckelring 14 wiederum Wandabschnitte 42, 44 vorgesehen. Seitlich am Ringgrundkörper 34 ist der Steckerkragen 16 angesetzt, in den der Stecker 18 eingesetzt wird, um die elektrische Verbindung herzustellen. Das heißt, durch die als gesonderte Bauteile bereitgestellten Ringe 10, 12 können herkömmliche Blowby-Anschlusselemente, wie beispielsweise ein Norma-Stutzen und ein Norma-Kupplungsstück 4 in der erfindungsgemäßen Weise nachgerüstet werden. Wie erläutert ist es auch möglich, den Sicherungsring 10 einstückig mit dem Kupplungsstück 4 auszubilden.

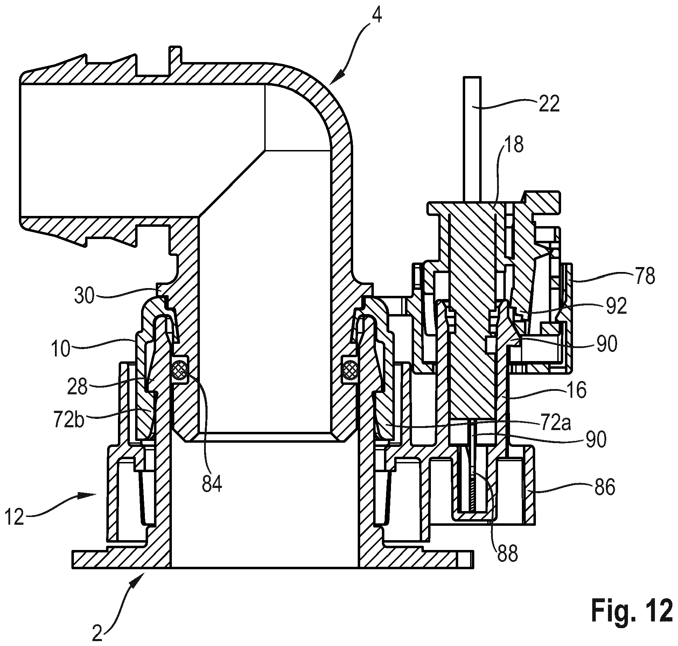

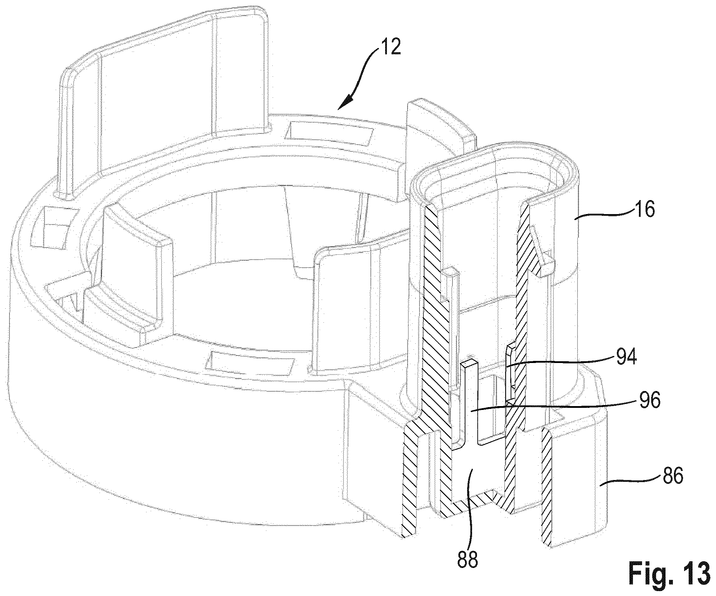

Figur 12 zeigt einen Schnitt durch das Ausführungsbeispiel gemäß Figur 10. Dem gemäß ist das Kupplungsstück 4 in den Anschlussstutzen 2 eingesetzt, wobei die Abdichtung, wie auch bei den zuvor beschriebenen Ausführungsbeispielen über einen O-Ring 84 erfolgt. Der Sicherungsring 10 liegt dabei an der Unterseite (Ansicht nach Figur 12) der Stützschulter 30 an, wobei die Rastnasen 72a, 72b die umlaufende Rastschulter 28 hintergreifen. In der Darstellung gemäß Figur 12 erkennt man, dass bei hergestellter Steckverbindung der Streckerkragen 16 abschnittsweise in die Führungsmanschette 78 eintaucht. Der Stecker 18 ist dabei noch nicht in seine Endposition verschoben sondern lediglich in einen Teil des Steckerkragens 16 eingeführt. Im unteren Bereich des Steckerkragens 16 ist ein Gehäuseabschnitt 86 ausgebildet, in dem eine Kontaktbrücke 88 aufgenommen ist, die jedoch noch nicht in elektrischem Kontakt mit dem Stecker 18 steht. Diese Kontaktbrücke 88 hat (siehe auch Figur 13) eine etwa U-förmige Struktur, so dass eine elektrische Verbindung zwischen den beiden Stromzuführungen 20, 22 herstellbar ist. Figur 13 zeigt eine Einzeldarstellung des vorbeschriebenen Rings 12 gemäß Figur 11 mit teilweise geschnittenem Steckerkragen 16, so dass die U-förmige Kontaktbrücke 88 sichtbar wird, die im Steckerkragen 16 bzw. im Gehäuseabschnitt 86 eingebettet ist, wobei zwei Kontaktstifte 94, 96 nach innen, in den vom Steckerkragen 16 umgriffenen Raum vorstehen.

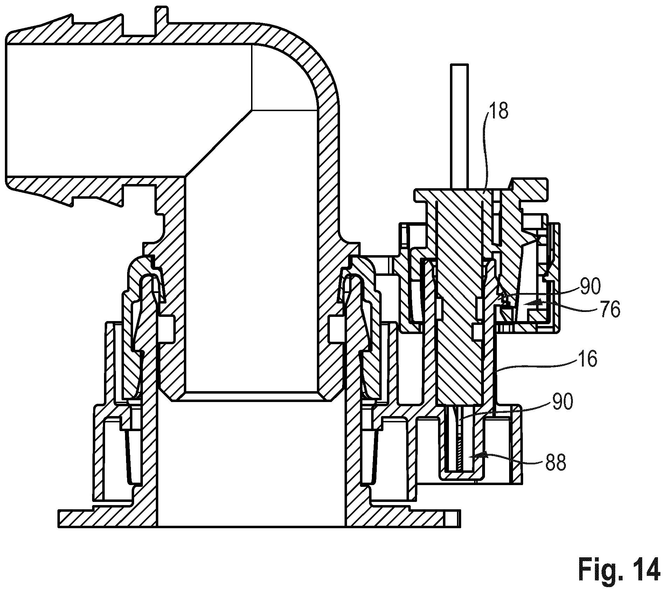

Gemäß Figur 14 wird dann die elektrische Kontaktierung durch vollständiges Einführen des Steckers 18 in den Steckerkragen 16 bewirkt, wobei dann die Kontaktbrücke 88 in Ausnehmungen des Steckers 18 eintaucht und die beiden Stromzuführungen 20, 22 elektrisch verbindet, so dass der genannte Detektor oder die Blowby-Heizung bestromt werden. Die Steckposition des Steckers 18 wird bei diesem Ausführungsbeispiel ebenfalls durch ein Sicherungselement 76 gewährleistet, wobei eine Rastverbindung zwischen einer Sicherungsnase 90 des Steckerkragens 16 und entsprechenden Rastelementen 92 des Steckers 18 erfolgt.

Offenbart ist eine Blowby-Einrichtung mit einem Anschlussstutzen und einem Kupplungsstück, die miteinander verbindbar sind. Erfindungsgemäß ist ein Ring vorgesehen, an dem ein Steckerkragen für einen Stecker zur Herstellung einer elektrischen Verbindung vorgesehen ist. Dieser Ring kann an den Anschlussstutzen angesetzt werden.

### Bezuaszeichenliste:

- 1: Blowby-Einrichtung
- 2: Anschlussstutzen
- 4: Kupplungsstück
- 6: Anschluss
- 8: Blowby-Leitung
- 10: Sicherungsring
- 12: Ring
- 14: Gehäuse
- 16: Steckerkragen
- 18: Stecker
- 20: Stromzuführung
- 22: Stromzuführung
- 24: Grundplatte
- 26: Stutzen
- 28: Rastschulter
- 30: Stützschulter
- 32: Riegellasche
- 34: Ringgrundkörper
- 36: Stirnflächenabschnitte
- 38: Stützlasche
- 40: Deckelring
- 41: Ausnehmungen
- 42: Wandabschnitte
- 44: Wandabschnitte
- 46: Führung
- 48: Taster
- 50: Blattfederelement
- 52: Zapfen
- 54: Klemmausnehmung
- 56: Stützschenkel
- 60: Kontaktschenkel
- 62: Kontakt
- 63: Stirnseite
- 64: Boden
- 66: Endabschnittkontakt
- 67: O-Ring
- 68: Mitnehmer
- 70: Haltearm
- 72: Rastnase
- 74: Stirnflächenabschnitt
- 76: Sicherungselement
- 78: Führungsmanschette
- 80: Haltering
- 82: Radialstütze
- 84: O-Ring
- 86: Gehäuseabschnitt
- 88: Kontaktbrücke
- 90: Sicherungsnase
- 92: Rastelement
- 94: Kontaktstift
- 96: Kontaktstift

## Patentansprüche

1. Blowby-Einrichtung eines Verbrennungsmotors, mit einem ansaugseitigen Anschlussstutzen (2), der mit einem Kupplungsstück (4) an das eine Blowby-Leitung (8) angeschlossen ist lösbar verbindbar ist, wobei die Verbindung zwischen Kupplungsstück (4) und Anschlussstutzen (2) mit einem Sicherungsring (10) gesichert ist, **gekennzeichnet durch** einen an den Anschlussstutzen (2) ansetzbaren Ring (12), der einen Steckerkragen (16) zur Aufnahme eines Steckers (18) trägt, der bei mit dem Kupplungsstück (4) verbundenen Anschlussstutzen (2) einen elektrischen Kontakt schließt.

2. Blowby-Einrichtung nach Patentanspruch 1, wobei am Ring (12) mindestens ein Taster (48) geführt ist, der bei Verbringen des Sicherungsrings (10) in seine Sicherungsposition elektrische Kontaktelemente in Richtung ihrer Kontaktposition mit dem Stecker (18) bewegt.

3. Blowby-Einrichtung nach Patentanspruch 2, wobei die Kontaktelemente durch ein Federelement gebildet sind, das in Richtung des Unterbrechens der Kontaktierung vorgespannt ist.

4. Blowby-Einrichtung nach Patentanspruch 2 oder 3, wobei das Federelement mit Stützschenkeln (56) an einem Gehäusedeckel oder dergleichen abgestützt ist.

5. Blowby-Einrichtung nach Patentanspruch 3 oder 4, wobei das Federelement als Blattfederelement (50) ausgebildet ist, das in einem Gehäuse (14) aufgenommen ist, in dem auch der Taster (48) geführt ist und das mit dem Ring (10) verbunden ist.

6. Blowby-Verbindung nach einem der vorhergehenden Patentansprüche, wobei der Ring (12) mit dem Anschlussstutzen (2) verrastet ist.

7. Blowby-Einrichtung nach einem der vorhergehenden Patentansprüche, wobei der Ring (12) Führungselemente zur Lagepositionierung des Sicherungsrings (10) hat.

8. Blowby-Einrichtung nach einem der vorhergehenden Patentansprüche, wobei der Sicherungsring (10) einen Stirnflächenabschnitt (74) hat, der in Anlage an einen etwa quer zu Verstellrichtung vorstehenden Mitnehmer (68) des Tasters (48) bringbar ist.

9. Blowby-Einrichtung nach einem der vorhergehenden Patentansprüche, wobei die Verstellrichtung des Tasters (48) etwa parallel zur Anschlussstutzenachse verläuft.

10. Blowby-Einrichtung nach einem der vorhergehenden Patentansprüche, wobei der Stecker (18) parallel zur Anschlussstutzenachse angeordnet ist.

11. Blowby-Einrichtung nach einem der vorgehenden Patentansprüche, wobei der Sicherungsring (10) eine Führungsmanschette (78) für den Stecker (18) hat, die zum Verbinden in Überdeckung mit dem Steckerkragen (16) bringbar ist, wobei dieser zumindest abschnittsweise in die Führungsmanschette (78) eintaucht.

12. Blowby-Einrichtung nach Patentanspruch 11, wobei im Steckerkragen (16) eine Kontaktbrücke (88) vorgesehen ist, die beim Einsetzen des Steckers (18) eine elektrische Verbindung herstellt.

13. Blowby-Einrichtung nach Patentanspruch 11 oder 12, wobei der Stecker (18) in der Führungsmanschette (78) vormontiert ist.

14. Blowby-Einrichtung nach einem der vorhergehenden Patentansprüche, wobei die Kontaktelemente eine elektrische Verbindung zu einer Blowby-Heizung oder einem Detektor herstellen.

15. Blowby-Einrichtung nach einem der vorhergehenden Patentansprüche, mit einer Blowby-Heizung, die im Bereich des Anschlussstutzens (2) oder des Kupplungsstücks (4) angeordnet ist.

## Claims

1. Blow-by device of an internal combustion engine comprising an inlet-sided connection piece (2) that can be releasably connected to a coupling piece (4) to which a blow-by line (8) is connected, wherein the connection between the coupling piece (4) and the connection piece (2) is secured by a securing ring (10), **characterized by** a ring (12) that can be positioned to the connection piece (2), the ring carrying a connector collar (16) for seating a connector (18) that closes an electric contact in the connection piece (2) connected with the coupling piece (4).

2. The blow-by device according to claim 1, wherein at least one sensing device (48) is guided on the ring (12) that upon adjusting the securing ring (10) into its securing position moves electric contact elements in the direction of their contact position with the connector (18).

3. The blow-by device according to claim 2, wherein the contact elements are formed by a spring element that is pre-stressed in an interrupting direction of the contacting.

4. The blow-by device according to claim 2 or 3, wherein the spring element is supported on a case cover or the like by platform legs (56).

5. The blow-by device according to claim 3 or 4, wherein the spring element is executed as a leaf spring element (50) that is received in a case (14) in which also the sensing device (48) is guided, and that is connected to the ring (10).

6. The blow-by device according to one of the preceding claims, wherein the ring (12) is locked in place with the connection piece (2).

7. The blow-by device according to one of the preceding claims, wherein the ring (12) has guide elements for positioning the securing ring (10).

8. Blow-by device according to one of the preceding claims, wherein the securing ring (10) has an end face portion (74) that being in abutment may be brought to a carrier (68) of the sensing device (48) that protrudes approximately crosswise to an adjustment direction.

9. The blow-by device according to one of the preceding claims, wherein the adjustment direction of the sensing device (48) runs approximately parallel to the axis of the connection piece.

10. The blow-by device according to one of the preceding claims, wherein the connector (18) is positioned in parallel to the axis of the connection piece.

11. The blow-by device according to one of the preceding claims, wherein the securing ring (10) has a guiding sleeve (78) for the connector (18) that for connection may be brought into a position so as to overlap with the connector collar (16), the connector collar immersing in the guiding sleeve (78) at least in sections.

12. The blow-by device according to claim 11, wherein in the connector collar (16) a contact bridge (88) is provided that in inserting the connector (18) establishes an electric connection.

13. The blow-by device according to claim 11 or 12, wherein the connector (18) is pre-mounted in the guiding sleeve (78).

14. The blow-by device according to one of the preceding claims, wherein the contact elements establish an electric connection to a blow-by heater or to a detector.

15. The blow-by device according to one of the preceding claims, including a blow-by heater located within the area of the connection piece (2) or the coupling piece (4).

## Revendications

1. Dispositif de gaz de carter d'un moteur à combustion interne, avec une tubulure de raccordement (2) du côté d'aspiration, qui peut être reliée de façon détachable à une pièce d'accouplement (4) à laquelle est raccordée une conduite (8) de gaz de carter, dans lequel la jonction entre la pièce d'accouplement (4) et la tubulure de raccordement (2) est assurée avec une bague de sécurité (10), **caractérisé par** une bague (12) pouvant être fixée à la tubulure de raccordement (2), qui porte un collet de fiche mâle (16) pour le logement d'une fiche mâle (18), qui dans la tubulure de raccordement (2) reliée à la pièce d'accouplement (4) ferme un contact électrique.

2. Dispositif de gaz de carter selon la revendication 1, dans lequel sur la bague (12) est guidé au moins un bouton-poussoir (48) qui, lors du transfert de la bague de sécurité (10) dans sa position de sécurité, déplace des éléments de contact électriques dans le sens de leur position de contact avec la fiche mâle (18).

3. Dispositif de gaz de carter selon la revendication 2, dans lequel les éléments de contact sont formés par un élément formant ressort, qui est précontraint dans le sens de l'interruption de la mise en contact.

4. Dispositif de gaz de carter selon la revendication 2 ou 3, dans lequel l'élément formant ressort est appuyé avec des branches d'appui (56) à un couvercle de carter ou similaire.

5. Dispositif de gaz de carter selon la revendication 3 ou 4, dans lequel l'élément formant ressort est conçu comme un élément formant ressort à lame (50), qui est logé dans un carter (14), dans lequel également le bouton-poussoir (48) est guidé et qui est relié avec la bague (10).

6. Dispositif de gaz de carter selon l'une des revendications précédentes, dans lequel la bague (12) est enclenchée avec la tubulure de raccordement (2).

7. Dispositif de gaz de carter selon l'une des revendications précédentes, dans lequel la bague (12) possède des éléments de guidage pour le positionnement de la bague de sécurité (10).

8. Dispositif de gaz de carter selon l'une des revendications précédentes, dans lequel la bague de sécurité (10) possède une section de face avant (74) qui, en position, peut être avancée sur un toc d'entraînement (68), faisant saillie presque transversalement au sens de déplacement, du bouton-poussoir (48).

9. Dispositif de gaz de carter selon l'une des revendications précédentes, dans lequel la direction de déplacement du bouton-poussoir (48) passe presque parallèlement à l'axe de la tubulure de raccordement.

10. Dispositif de gaz de carter selon l'une des revendications précédentes, dans lequel la fiche mâle (18) est disposée parallèlement à l'axe de la tubulure de raccordement.

11. Dispositif de gaz de carter selon l'une des revendications précédentes, dans lequel la bague de sécurité (10) possède une manchette de guidage (78) pour la fiche mâle (18) qui, aux fins de jonction, peut être amenée en recouvrement avec le collet de fiche mâle (16), dans lequel celui-ci s'enfonce au moins par sections dans la manchette de guidage (78).

12. Dispositif de gaz de carter selon la revendication 11, dans lequel est prévu un pont de contact (88) dans le collet de fiche mâle (16), lequel établit une liaison électrique lors de l'insertion de la fiche mâle (18).

13. Dispositif de gaz de carter selon la revendication 11 ou 12, dans lequel la fiche mâle (18) est montée à l'avance dans la manchette de guidage (78).

14. Dispositif de gaz de carter selon l'une des revendications précédentes, dans lequel les éléments de contact établissent une liaison électrique avec un chauffage à gaz de carter ou un détecteur.

15. Dispositif de gaz de carter selon l'une des revendications précédentes, avec un chauffage à gaz de carter qui est disposé dans la zone de la tubulure de raccordement (2) ou de la pièce d'accouplement (4).
